# EUROPEAN PATENT APPLICATION

(11) **EP 0 646 548 A2**
(43) Date of publication of application: **05.04.1995**
(21) Application number: 94103850.7
(22) Date of filing: 12.03.1994
(51) Int. Cl.: C02F 1/48, F02M 27/04, C10G 32/00

(54) **Magnetic circuit and a magnetization processing apparatus**

(30) Priority: 30.09.1993 JP 278797/93; 28.12.1993 JP 337337/93
(71) Applicant: Fujimoto, Shigenobu, Kuga-gun, Yamaguchi 740-12 (JP); Bozono, Hiroyuki, Hiroshima-shi, Hiroshima 730 (JP); Nakatani, Yutaka, Hiroshima-shi, Hiroshima 736 (JP)
(72) Inventor: Fujimoto, Shigenobu, Kuga-gun, Yamaguchi 740-12 (JP); Bozono, Hiroyuki, Hiroshima-shi, Hiroshima 730 (JP); Nakatani, Yutaka, Hiroshima-shi, Hiroshima 736 (JP)
(74) Representative: Selting, Günther, Dipl.-Ing.

(57) **Abstract**

A magnetic circuit to apply magnetization processing to an object material wherein the magnetic path opens only in the section where the magnetization processing takes place, and leakage of magnetic field to the outside is prevented so that a stable and strong magnetic field is applied to the object material of the magnetization processing for a long period of time. A magnetization processing apparatus using the magnetic circuit to apply a strong magnetic field to a liquid material such as fuel oil thereby to change the chemical properties thereof.

## Description

### BACKGROUND OF THE INVENTION

### Field of the invention

The present invention relates to a magnetization processing apparatus to magnetize an object material by applying a magnetic field thereto, and particularly to a magnetic circuit therefor.

### Description of Related Art

There are methods of modifying the properties of liquid materials such as water and oil by applying a strong magnetic field thereto, thereby causing them to absorb magnetic energy. For example, an attempt of improving the combustion efficiency by causing nuclear magnetic resonance in hydrocarbon fuel oils, and an attempt to make it easier to remove impurities from contaminated water by applying a strong magnetic field thereto in the pre-treatment process have been proposed by the present applicant. In order to change the chemical properties of a liquid material composed of a hydrogen compound by applying a magnetic field thereto, it is necessary to apply a strong magnetic field of 10,000 gauss or higher intensity for a relatively long period of time.

Therefore, such a magnetization processing requires a magnetic circuit capable of applying a constant strong magnetic field to the liquid material to be processed for a long period of time. However, such a magnetic circuit composed of permanent magnet as meets this purpose, namely that generates a strong magnetic field in an open section of the magnetic field wherein the liquid material to be processed exists for a long period of time without loss has not been available.

### SUMMARY OF THE INVENTION

Major object of the invention is to provide a magnetic circuit composed of permanent magnet capable of generating a strong magnetic field for a long period of time in an open section of a magnetic path which is a place where magnetization processing takes place, and a magnetization processing apparatus which uses the magnetic circuit.

Another object of the invention is to provide a magnetic circuit composed of permanent magnet capable of applying a strong magnetic field to an object material for a long period of time while preventing the magnetic force from leaking, and a magnetization processing apparatus which uses the magnetic circuit.

Further another object of the invention is to provide a magnetic circuit capable of preventing the magnetic force of the permanent magnet from decreasing due to magnetic leakage, and a magnetization processing apparatus which uses the magnetic circuit.

The magnetic circuit of permanent magnet of the invention to apply magnetization processing to the object material has no opening of the magnetic path except for a section where the magnetization processing takes place, and the magnetic path opens only in the section where the magnetization processing takes place. In the magnetic circuit of the invention, the section where the magnetic path opens is limited to the area where the magnetization processing is carried out and no opening exists in other part. Consequently, because the entire magnetic force generated by the magnet is concentrated in the opening without leaking midway, the strong magnetic force is certainly applied to the object material of the magnetization processing without loss.

The magnetic circuit of the invention also has a member made of a non-magnetic material to maintain the opening of the magnetic path, the member being provided in the opening of the magnetic path. Thus a space is maintained in resistance to the strong attracting force of the open magnetic field by means of the non-magnetic member.

It is well known that the magnetic force leaks strongly from a sharp edge portion. But the magnetic circuit of the invention also has a yoke made of a good magnetic material without any sharp edge, thus preventing the magnetic force from leaking to the outside.

The magnetization processing apparatus of the invention applies magnetization processing to a liquid material by using the magnetic circuit as described above, and has a fluid passage pipe wherein the liquid material flows and the magnetic circuit which is open only in the portion where the fluid passage pipe is installed.

Also the magnetization processing apparatus of the invention applies magnetization processing to a liquid material by using the magnetic circuit as described above, and has a fluid passage pipe wherein the liquid material flows, a magnet having opposing poles, a first yoke connected to the magnet to form a closed magnetic loop and a second yoke connected to the magnet to form an open magnetic loop, with the fluid passage pipe passing the opening of the open magnetic loop.

In the magnetization processing apparatus of the invention having the constitution as described above, a magnetic field of high intensity is applied to liquid materials such as fuel oil, contaminated water and other, thereby to change the chemical properties thereof.

The above and further objects and features of the invention will more fully be apparent from the following detailed description with accompanying drawings.

### BRIEF DESCRIPTION OF THE DRAWINGS

Fig.1 is an oblique view drawing of a magnetic circuit composed of permanent magnet of the invention being partially broken away.

Fig.2 is a cross sectional drawing of the magnetic circuit composed of permanent magnet of the invention.

Fig.3 is a cross sectional drawing illustrative of the assembly process of the magnetic circuit composed of permanent magnet of the invention.

### DESCRIPTION OF THE PREFERRED EMBODIMENTS

Now the invention will be described in detail with reference to the drawings which illustrate the preferred embodiments.

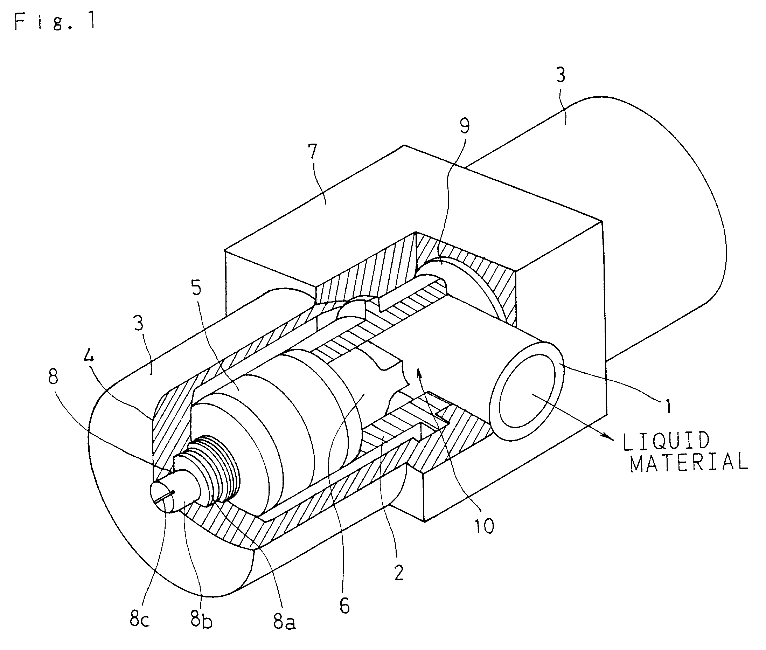

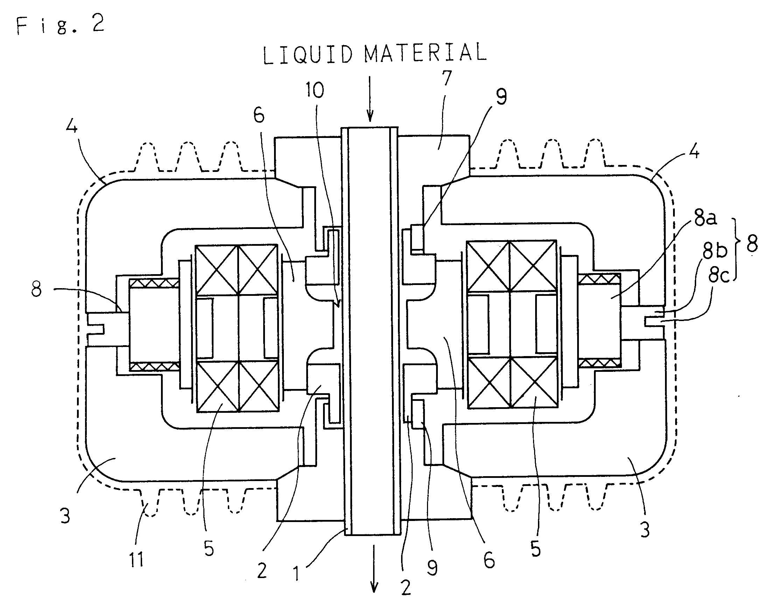

Fig.1 is an oblique view drawing illustrative of a magnetic circuit using a permanent magnet of the invention with a part being broken away. Fig.2 is a cross sectional drawing of the magnetic circuit of the invention. In the drawings, numeral 5 denotes permanent magnets. Ends of the magnets 5, 5 are connected to adjust screw yokes 8, 8 made of a good magnetic material. The adjust screw yokes 8, 8 have threaded portions 8a, 8a where threads are formed on the circumference thereof and end portions 8b, 8b with grooves 8c, 8c being formed on the end faces thereof. Threaded portions of the adjust screw yokes 8, 8 are screwed into threaded grooves which are formed on the inner surfaces of outer yokes 3, 3 made of a good magnetic material which house the magnets 5, 5. The outer yoke 3 is made in such a shape that has a rounded edge 4 as shown in the drawing to prevent magnetic leakage to the outside, because a sharp edge in a magnetic circuit will allow the magnetic force to leak through it to the outside. Tapered portions at ends of the outer yokes 3, 3 are brought into close contact with a tapered portion of a magnetic relay block 7 made of a good magnetic material installed at the center.

Center sides of the magnets 5, 5 are connected to inner yokes 6, 6 made of a good magnetic material which are arranged to oppose each other at a specified distance. The space between the opposing inner yokes 6, 6 makes an opening 10 of a magnetic path. Spacers 2, 2 made of a nonmagnetic material such as aluminum, stainless steel or copper clamped by ring spacers 9, 9 which are retainer rings are installed in contact with the inner yokes 6, 6, thereby keeping a space to resist a strong attracting force of the open magnetic field.

In the constitution as described above, a closed magnetic circuit is formed to run from the N pole of the magnet 5 through the adjust screw yoke 8, the outer yoke 3, the magnetic relay block 7, the outer yoke 3 and the adjust screw yoke 8 to reach the S pole of the opposing magnet 5, forming a large external loop (closed loop). A small loop is also formed to run from the N pole of the magnet 5 through the opposing internal yokes 6, 6 to reach the S pole of the opposing magnet 5, thereby forming an open magnetic loop (open loop). Thus a complete closed magnetic circuit is formed at more distance from the magnets 5, 5 than the open magnetic circuit having the opening 10 in the magnetic path. The closed magnetic circuit interposing the magnetic relay block 7 is made in a completely closed construction, and the outer yokes 3, 3 are constructed entirely with rounded edges 4, 4, and therefore there is no leakage of the magnetic field to the outside. In the open magnetic circuit interposing the inner yokes 6, 6, a stable open magnetic field is maintained by the attracting force of strong magnetic field of the inner yokes 6, 6, namely a magnetic lens, via the spacer 2 made of a nonmagnetic material.

A fluid passage pipe 1 of a cylindrical shape passing through the opening 10 of the magnetic path is installed to penetrate the magnetic relay block 7. Through the fluid passage pipe 1, a liquid material to be magnetized is introduced into the magnetic circuit of the invention in the direction indicated by the arrow in the drawing. The outer yokes 3, 3 and the end portions 8b, 8b of the adjust screw yokes 8, 8 are enclosed by a heat dissipating casing 11 made of aluminum. The heat dissipating casing 11 is omitted in Fig.1.

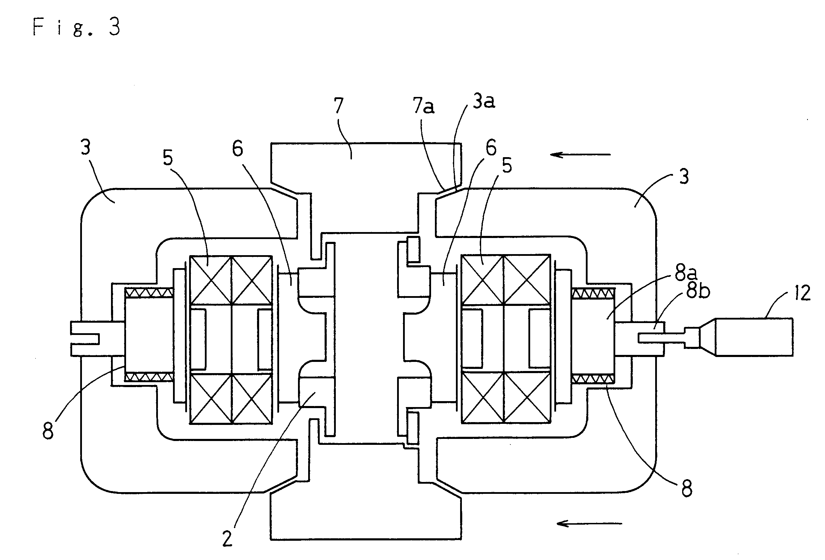

Now the assembling procedure of the invention will be described below. Fig.3 is a cross sectional drawing illustrative of the positions of the members before assembly. As shown in Fig.3, a tapered portion 3a of the outer yoke 3 which houses the magnet 5, the inner yoke 6 and other, and a tapered portion 7a of the magnetic relay block 7 are positioned to oppose each other. The end portion 8b of the adjust screw yoke 8 is turned by means of a screw driver 12 to screw in the threaded part of the adjust screw yoke 8 into the threaded groove of the outer yoke 3, thus the outer yoke 3 is moved in the direction of the arrow thereby to bring the tapered portion 3a of the outer yoke 3 and the tapered portion 7a of the magnetic relay block 7 into close contact with each other. When close contact is attained, turn of the screw driver 12 is stopped and the end portion 8b is cut off by means of a grinder so that the adjust screw yoke 8 and the outer yoke 3 become flush. Last, the outer yoke 3 and the end portion 8b of the adjust screw yoke 8 are covered by the heat dissipating casing 11.

By assembling as described above, the space between the tapered portion 3a of the outer yoke 3 and the tapered portion 7a of the magnetic relay block 7 is completely closed by the strong attracting force of the inner yokes 6, 6, thereby forming the closed magnetic circuit as described above. Once the outer yoke 3 and the magnetic relay block 7 are brought together by the attracting force, they cannot be disassembled easily.

An example of magnetization processing using the magnetic circuit of the invention made in such a constitution as described above will be described below. In this example, the magnetic circuit of the invention is installed between a fuel tank and a combustion system of an automobile, to improve the combustion efficiency by applying a strong magnetic field to flowing gasoline by means of the magnetic circuit of the invention. The gasoline supplied from the fuel tank is introduced into the magnetic circuit via the fluid passage pipe 1, and is magnetized by the applied magnetic field while it passes through the opening 10 of the magnetic path, so that the magnetized gasoline is supplied to the combustion system downstream. Because the gasoline which has passed the opening 10 of the magnetic path is magnetized, and chemical properties thereof are changed to improve the combustion efficiency.

Because only the portion where magnetization processing is carried out, namely the portion through which a liquid material such as gasoline passes, is made to be the opening 10 of the magnetic path in the magnetic circuit of the invention, magnetic force does not leak from other parts. Also because the magnetic circuit has no sharp edges in any part thereof, there is almost no magnetic leakage to the outside. Consequently, a magnetic field of a constant intensity can be generated in the opening 10 of the magnetic path for a long period of time, thereby making it possible to apply magnetization of enough intensity to change the chemical properties of the liquid material to be magnetized.

Although a case of magnetizing a fuel oil to improve the combustion efficiency of hydrocarbon fuel oil has been described in the above embodiment, it needs not to say that the invention can be applied quite similarly to other embodiments of magnetization processing such as improving the efficiency of purifying contaminated water by magnetizing it.

In the magnetic circuit of the invention, as described above, because the section where the magnetic path is open is limited to the portion where the magnetization processing is carried out, the invention has excellent effects such as that leakage of magnetic force to the outside can be prevented, that an open magnetic field of stable intensity can be obtained for a long period of time, and that decrease of the magnetic force of the magnet due to magnetic leakage can be prevented.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. A magnetic circuit using a permanent magnet to apply magnetization processing to an object material, wherein the magnetic path is open only in a portion (10) where the magnetization processing is carried out.

2. A magnetic circuit of claim 1 wherein a member (2) made of a nonmagnetic material to maintain open condition of the magnetic path is provided in a portion (10) where the magnetic path is open.

3. A magnetic circuit of claim 1 wherein a yoke (3) made of a good magnetic material in such a constitution as all portions comprises rounded edges (4).

4. A magnetization processing apparatus to apply magnetization processing to a liquid material, comprising a fluid passage pipe (1) wherein the liquid material passes and a magnetic circuit with the magnetic path thereof being open only in a portion (10) where the fluid passage pipe (1) is installed.

5. A magnetization processing apparatus of claim 4 wherein the liquid material is one selected from among a group consisting of a hydrocarbon fuel oil and contaminated water.

6. A magnetization processing apparatus to apply magnetization processing to a liquid material, comprising a fluid passage pipe (1) wherein the liquid material passes, a magnet (5) with both poles opposing each other, a first yoke (3, 8) which is connected to the magnet (5) and forms a closed magnetic loop and a second yoke (6) which is connected to the magnet (5) and forms an open magnetic loop, wherein the fluid passage pipe (1) passes an open section (10) of the open magnetic loop.

7. A magnetization processing apparatus of claim 6 wherein the liquid material is one selected from among a group consisting of a hydrocarbon fuel oil and contaminated water.

8. A magnetization processing apparatus of claim 6, further comprising a heat dissipating casing (11) which covers the first yoke (3, 8).
